(19) **Europäisches Patentamt**
**European Patent Office**
**Office européen des brevets**

(11) **EP 3 391 691 B1**

(12) **EUROPEAN PATENT SPECIFICATION**

(45) Date of publication and mention
of the grant of the patent:
**15.07.2020 Bulletin 2020/29**

(51) Int Cl.:
***H04W 48/20*** *(2009.01)*     ***H04W 88/06*** *(2009.01)*

(21) Application number: **15808652.0**

(86) International application number:
**PCT/EP2015/079724**

(22) Date of filing: **15.12.2015**

(87) International publication number:
**WO 2017/101979 (22.06.2017 Gazette 2017/25)**

(54) **COMMUNICATION DEVICE AND METHOD THEREIN FOR SELECTING CELL AND RADIO ACCESS TECHNOLOGY IN WIRELESS COMMUNICATION NETWORK.**

KOMMUNIKATIONSVORRICHTUNG UND VERFAHREN DARIN ZUR ZELLAUSWAHL UND FUNKZUGANGSTECHNOLOGIE IN EINEM DRAHTLOSKOMMUNIKATIONSNETZWERK

DISPOSITIF DE COMMUNICATION ET PROCÉDÉ ASSOCIÉ, POUR SÉLECTIONNER UNE CELLULE ET UNE TECHNOLOGIE D'ACCÈS RADIO DANS UN RÉSEAU DE COMMUNICATIONS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.10.2018 Bulletin 2018/43**

(73) Proprietor: **Telefonaktiebolaget LM Ericsson (PUBL)**
**164 83 Stockholm (SE)**

(72) Inventors:
• **LINDOFF, Bengt**
**237 35 Bjärred (SE)**
• **ÅSTRÖM, Magnus**
**222 28 Lund (SE)**
• **AXMON, Joakim**
**216 31 Limhamn (SE)**

(74) Representative: **Ericsson**
**Patent Development**
**Torshamnsgatan 21-23**
**164 80 Stockholm (SE)**

(56) References cited:
**EP-A1- 2 466 970**     **WO-A1-2015/073448**
**US-A1- 2013 090 137**

• **"3 Generation Partnership Project; Technical Specification Group Radio Access Network; Evolved Universal Terrestrial Radio Access (E-UTRA); User Equipment (UE) procedures in idle mode (Release 12)", 3GPP STANDARD; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.6.0, 24 September 2015 (2015-09-24), pages 1-38, XP050996298, [retrieved on 2015-09-24]**
• **ERICSSON: "Dual-SIM Dual-Standby UEs and their impact on the RAN", 3GPP TSG-RAN#54; BERLIN, GERMANY; 6TH - 9TH DECEMBER, 2011, , vol. Tdoc RP-111637 6 December 2011 (2011-12-06), pages 1-3, XP002711206, Retrieved from the Internet: URL:http://www.3gpp.org/ftp/tsg_ran/TSG_RAN/TSGR_54/docs/RP-111637.zip [retrieved on 2013-08-12]**

**Description**

TECHNICAL FIELD

Embodiments herein relate to a wireless communication device and a method therein. In particular, they relate to cell and Radio Access Technology (RAT) selection in the wireless communication device which comprises at least two Subscriber Identity Modules, SIMs, operating in idle mode.

BACKGROUND

Wireless communication devices may be referred to as mobile telephones, user equipments (UE), wireless terminals, mobile terminals, mobile stations, cellular telephones, smart phones, laptops, tablets and phablets, i.e. a combination of a smartphone and a tablet with wireless capability. Wireless communication devices are enabled to communicate or operate wirelessly in a wireless communication system comprising multiple networks or Heterogeneous Networks (HetNet) with access nodes or access points. The heterogeneous networks may comprise, e.g. a cellular communications network comprising Second /Third Generation (2G/3G) network, such as Global System for Mobile Communications (GSM), Wideband Code Division Multiple Access (WCDMA) or High Speed Packet Access (HSPA) etc., 3G Long Term Evolution (LTE) network, Worldwide interoperability for Microwave Access (WiMAX) network, Wireless Local Area Network (WLAN) or WiFi etc. for proving different type of radio access technologies (RATs). A wireless communications network may cover a geographical area which is divided into cells or cover areas, wherein each cell is served by a network node, which may also be referred to as a serving network node, an access node, an access point or a base station, e.g. eNodeB or NodeB.

The development of new generations of cellular systems simultaneously with upgrading existing generations allows for a wider range of accessible networks and RATs. Previously the preference of what system or network to use, given a choice, has most often been the latest one. At present that is often LTE. For operators it may be a benefit of being able to shift traffic from heavily loaded, possibly also less efficient, older networks to newer, less loaded and more capable new networks. However, as most of wireless communication devices are equipped with the most recent generation of system, steering all LTE capable wireless communication devices to an LTE network may not be the preferred method in order to optimize the total network performance.

In an environment where a wireless communication device has access to multiple networks with different RATs, the prior art method gives the wireless communication device an influence of a network selection by using a setting stating a preferred RAT, e.g., LTE (preferred)/WCDMA (HSPA)/GSM. Hence, as long as signals from the LTE network may be received, the wireless communication device will use that instead of one of the other networks, e.g., HSPA. In an environment where e.g., both LTE and HSPA co-exist, data rates for the two RATs are comparable. Furthermore, both LTE and HSPA allow for multi carrier signalling. In LTE this capability is denoted as Carrier Aggregation (CA), allowing for up to five LTE carriers to be aggregated, whereas in HSPA it is denoted as Multi Carrier (MC), allowing for up to eight HSPA carriers to be aggregated.

Another arising scenario today is multiple Subscriber Identity Modules (SIMs) devices which may carry two or more SIMs from a single or multiple operators in the same device. Particularly in Asia this has become de facto standard, although it has not been standardized by the 3rd Generation Partnership Project (3GPP). On many markets it is hard to get operator approval and volumes for a mid-end device without the capability of supporting at minimum Dual SIM Dual Standby (DSDS). The capability of supporting DSDS allows a UE to be camping on two cells simultaneously, or being connected to one cell and camping on the other. In case both SIMs are from the same operator, the UE may occasionally camp on the same cell but with two different identities and associated paging occasions. In order to qualify for high-end device approval, it is generally required to support Dual SIM Dual Activity (DSDA), whereby the UE can be independently connected towards two cells simultaneously.

The popularity of DSDS/DSDA devices on Asian markets depends on several factors. One factor may be that operators have different price plans e.g. for data and voice, or may have different price plans depending on calling subscribers in same or other network. Other factors may be, e.g. different coverage by different operators, i.e. spotty coverage, or that one cannot move a mobile phone number between operators. The trend is towards to support even more than two SIMs simultaneously, and devices with support for three and four SIMs, Triple SIM, Triple Standby (TSTS) and Quad SIM Quad Standby (QSQS) have been announced by some UE vendors.

For improving the performance of wireless communication devices with multiple SIMs, it is desirable to select a cell and RAT to camp on for respective SIMs when it is in idle operating mode and optimize the selection of cells and RATs for all SIMs.

In EP2613592, a method for single SIM UEs to obtain the best suitable RAT for use is disclosed. Parameters such as throughput and/or latency, bandwidth, Reference Signal Received Power (RSRP) or Reference Signal Received Quality (RSRQ) may be measured for each of the available RATs, and the RAT with the best value in respect of high performance is selected.

However applying the same or similar principles for RAT selections for all SIMs in a wireless communication device with multiple SIMs may run into some problems. As in idle mode, a single receiver is usually used, i.e. radio resource is shared between SIMs, for power saving reason, and independent selection of the best RAT for respective SIM may cause trouble in radio resource management of the wireless communication device during the idle mode procedures for respective connections.

In EP2605558, a method for RAT selection for a dual SIMs UE in idle mode for power optimization is disclosed. For example, for reducing power consumption, a first RAT may be employed that provides less bandwidth but uses less power to operate than a performance-centered second RAT. If both SIMs are idle, it may search for and discover RATs by indicia of the RATs such as RAT type (2G/3G/4G), signal strength, cell identifiers, or other indicia. As Radio Frequency (RF) interface or resource may be shared between the two SIMs when in idle mode, it may monitor for incoming calls for either SIM in accordance with a first RAT. During connected mode, the first RAT used in idle mode for the first SIM may be switched to the second RAT. One limitation of this method is that the first and second SIMs are forced to use the same RAT when both are in idle mode. The coverage provided by the selected RAT may be unfavorable for one of the first or second SIM when those are from different operators.

In EP2466970, a method in a multi SIM device with at least two subscriber identities is disclosed. The device determines whether collisions between paging occasions for the different subscriber identities will be systematic or not. If so, then a new cell is selected for at least one of the subscriber identities.

In WO2015/073448, a method in a MSMS user equipment which can be registered in multiple networks is disclosed. Pages for the subscriptions may collide. If there are persistent collisions amongst the pages, then a colliding subscription may be forced to perform a cell reselection. The subscription to change can be selected by ranking of the neighboring cells of the respective subscriptions.

SUMMARY

It is therefore an object of embodiments as set out in the independent claims to provide an improved RAT and cell selection for a wireless communication device with multiple SIMs in a wireless communication system.

According to a first aspect of embodiments herein, the object is achieved by a method performed in a wireless communication device for selecting cell and Radio Access Technology, RAT, in a wireless communication system. The wireless communication device comprises at least two Subscriber Identity Modules, SIMs, and is in an idle operating mode. The wireless communication device determines a first cell and a first RAT to camp on for a first SIM based on estimating throughput or latency of a number of RATs and cells in the wireless communication system. The wireless communication device determines a second cell and a second RAT to camp on for a second SIM based on estimating throughput or latency of the number of RATs and cells in the wireless communication system. The wireless communication device further determines whether idle mode tasks of the first and second SIMs with the determined cells and RATs have conflicting needs. When the idle mode tasks of the first and second SIMs have conflicting needs, the wireless communication device selects a SIM for which to re-determine a cell and/or RAT to camp on, and determines a third cell and/or a third RAT for the selected SIM.

According to a second aspect of embodiments herein, the object is achieved by a communication device for selecting cell and Radio Access Technology, RAT, in a wireless communication system. The communication device is configured to determine a first cell and a first RAT to camp on for a first SIM based on estimating throughput or latency of a number of RATs and cells in the wireless communication system. The wireless communication device is further configured to determine a second cell and a second RAT to camp on for a second SIM based on estimating throughput or latency of the number of RATs and cells in the wireless communication system. The wireless communication device is further configured to determine whether idle mode tasks of the first and second SIMs with the determined cells and RATs have conflicting needs. When the idle mode tasks of the first and second SIMs have conflicting needs, the wireless communication device is configured to select a SIM for which to re-determine a cell and/or RAT to camp on, and determine a third cell and/or a third RAT for the selected SIM.

According to the embodiments herein, the best cells and RATs are determined for respective SIMs based on estimating throughput or latency of a number of RATs and cells in the wireless communication system.

After the best cells and RATs are determined for respective SIMs, the idle mode tasks of the first and second SIMs are checked whether they have conflicting needs, e.g. if they overlaps at least partly in time or need different carrier frequencies. If this is the case, one of the SIM needs to reselect a cell and/or RAT to camp on. In this way, an adaptation of at least one of the camping RAT/cells may be made so that radio resource management in the wireless communication device may be optimized to save power. Further, by determining which SIM needs to reselect a cell and/or RAT, the adaptation of cell and/or RAT may be based for instance on SIM prioritizations or next best cell and/or RAT, which may improve overall performance of the wireless communication device.

Thus, by determining the cells and RATs based on throughput or latency, and by further adapting the determined cells and RATs based on the idle mode tasks, the embodiments herein provide an improved method for optimized selection and combination of RATs and cells for all supported SIMs during idle mode in the wireless communication device.

BRIEF DESCRIPTION OF THE DRAWINGS

Examples of embodiments herein are described in more detail with reference to attached drawings in which:

Figure 1  is a schematic block diagram illustrating embodiments of a wireless communication system.

Figure 2  is a flowchart illustrating embodiments of a method in a wireless communication device.

Figure 3  is a schematic block diagram illustrating embodiments of a wireless communication device.

DETAILED DESCRIPTION

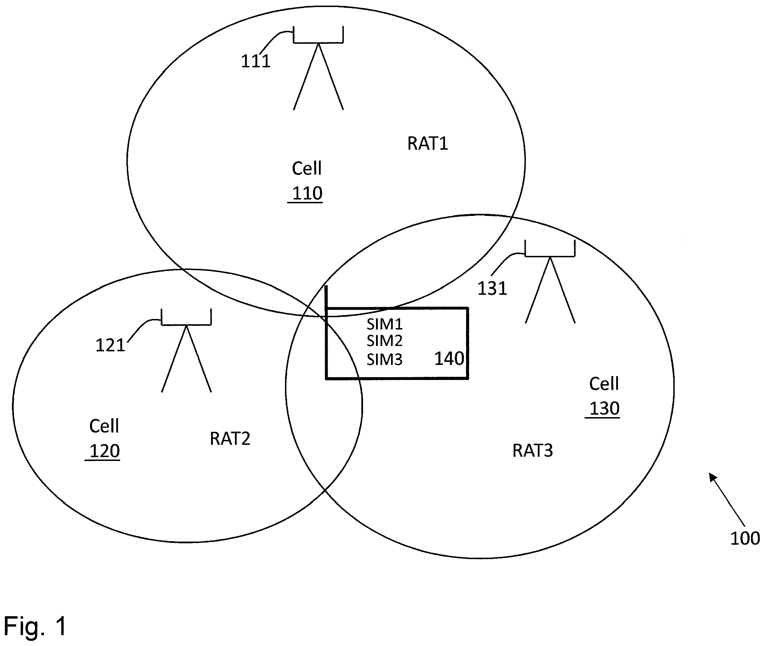

**Figure 1** depicts an example of a **wireless communication system 100** in which embodiments herein may be implemented. The wireless communication system 100 may comprise one or more wireless communication networks such as e.g. any 2G, 3G, 4G or LTE networks, Wimax, WLAN or WiFi , Bluetooth etc. for providing different RATs.

Each wireless communication network may cover a geographical area which is divided into cells or cover areas. Each cell area is served by a network node operating in the respective wireless communication network. In figure 1, three network nodes are shown, **network node 111, network node 121,** and **network node 131.** The term network node as used herein may also referred to as a serving network node, an access node, an access point or a base station. Therefore the wireless communication system 100 may comprise a number of network nodes serving cells with RATs which may be different, and support communications for a number of wireless communication devices located therein. The network node 111 serves a **cell 110** and provides a first RAT, **RAT1,** the network node 121 serves a **cell 120** and provides a second RAT, **RAT2,** and the network node 131 serves a **cell 130** and provides a third RAT, **RAT3.** The RATs, RAT1, RAT2 and RAT3 may be same or different RATs, e.g. LTE, WCDMA, GSM or Enhanced Data GSM Evolution (EDGE) etc.

A number of wireless communication devices operate in the wireless communication system 100, whereof one, a **wireless communication device 140,** is shown in Figure 1.

The wireless communication device 140 may be, e.g. a mobile terminal or station, a wireless terminal, a user equipment, a mobile phone, a computer such as e.g. a laptop, a Personal Digital Assistants (PDAs) or a tablet computer etc. The wireless communication device 140 comprises at least two SIMs, whereof the wireless communication device 140 shown in Figure 1 comprises SIM1, SIM2, SIM3. The at least two SIMs may belong to different operators, e.g. which may provide different subscriptions, or provide different RATs or use different spectrum in different cover areas or cells, e.g. in cities or countryside. Further, the service subscriptions of the two or more SIMs may differ, such as one SIM may provide an all-exclusive service whereas the other may provide only fundamental past generation service.

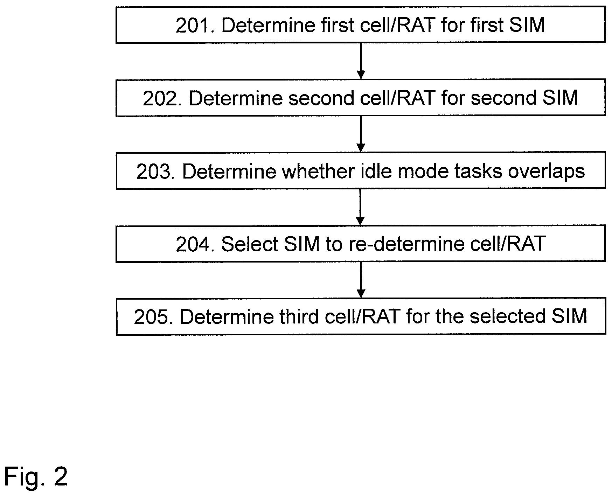

Example of embodiments of a method performed in the wireless communication device 140 for selecting cell and Radio Access Technology in the wireless communication system 100 will now be described with reference to **Figure 2.** The wireless communication device 140 comprises at least two Subscriber Identity Modules (SIMs), and is in an idle operating mode. The method comprises the following actions, which actions may be taken in any suitable order.

According to some embodiments, the wireless communication device 140 comprises a manager unit for the respective two or more SIMs, each of manage unit managing an idle mode procedure for the respective SIM, i.e. searching for and determining a best suitable cell and RAT to camp on etc. According to embodiments herein, the RAT giving the best expected throughput is determined for respective SIMs.

There are several reasons and advantages to determine RAT and cell selection based on throughput. The first is that the multiple SIMs may not belong to the same operator, e.g. one may provide an LTE subscription and the other a HSPA subscription. The second is that an operator may provide different technologies or use different spectrum in cities compared to the countryside. The third is that the service subscriptions of the two or more SIMs may differ, such as one SIM may provide an all-exclusive service whereas the other may provide only fundamental past generation service. Therefore throughput is a more appropriate parameter than e.g., traditional signal to noise ratio, SNR, since it gives a better indicator of the possible services that may be provided in an heterogeneous environment with different RATs.

On the other hand, determining the cell and RAT selection based on latency also has some advantages in some embodiments. For example, RAT with lowest latency may be selected for respective SIMs. Therefore, for some applications, e.g. time or mission critical message communication, real-time, tactile services or user interfaces, such as remote displaying, where it is required that transmission should not exceed a certain latency in order for the user not to start noticing it, the latency for the transmission may be reduced and thereby improve the performance of the wireless communication device. Moreover, small Transmission Control Protocol (TCP) packets with significant Acknowledged/Not Acknowledged (ACK/NACK) signaling may suffer in a high latency network since the ACK/NACK round trip time will limit new packets from being transmitted and hence limit performance. Determining the cell and RAT selection based on latency a low latency network could be selected.

Since there are different service requirements and/or applications for the different SIMs, the wireless communication device 140 may determine the first cell and RAT to camp on for the first SIM based on estimating throughput and determine a second cell and a second RAT to camp on for a second SIM based on estimating latency, or vice versa. Accordingly, the wireless communication device 140 performs the following actions:

## Action 201

The wireless communication device 140 determines a first cell and a first RAT to camp on for a first SIM based on estimating throughput or latency of a number of RATs and cells in the wireless communication system 100.

## Action 202

The wireless communication device 140 determines a second cell and a second RAT to camp on for a second SIM based on estimating throughput or latency of the number of RATs and cells in the wireless communication system 100.

According to some embodiments, the throughput or latency of at least two different RATs are estimated for the respective SIMs. Here the method for estimating throughput for three different RATs, e.g. LTE, HSPA, EDGE are described. However the method is not limited to these RATs.

In LTE, the expected throughput may be calculated e.g. by help of any one or more out of a Cell-Specific Reference Signal (CRS), a Channel State Information Reference Signal (CSI-RS) or Demodulation Reference Signal (DMRS) symbols, from which it is possible to estimate the Signal to Noise Ratio (SNR) and Mutual Information (MI), i.e., the amount of information that an LTE subcarrier is able to transmit over the present channel. Based on either a sub-band or wideband estimation of MI, it is possible to estimate the expected throughput of the LTE channel, by reading the bandwidth of the channel, which is part of the Master Information Blocks (MIB) in the Physical Broadcast Channel (PBCH), and multiplying the number of LTE subcarriers, derived from the bandwidth, with the MI for each subcarrier.

In the case both the network nodes 111, 121, 131 and the wireless communication device 140 are capable of Multiple Input Multiple Output (MIMO) transmissions using a spatial diversity MIMO channel, the MIs of the individual layers are accumulated, in order to take full advantage of the MIMO functionality that LTE offers. Therefore according to some embodiments, MIMO capabilities of the network nodes 111, 121, 131 in the cells 110, 120, 130 and/or the wireless communication device 140 are taken into account when estimating throughput.

In HSPA, a similar procedure is followed by using the Common Pilot Channel (CPICH) from which it is possible to estimate both SNR and MI. Having obtained these, the expected throughput may be computed. Also here, any MIMO capability of the network node 111, 121, 131 and the wireless communication device 140 is included when estimating throughput.

In EDGE the expected maximum throughput may be determined by reading System Information Blocks (SIBs). There are 13 SIBs, SIB1 to SIB13, defined in the 3rd Generation Partnership Project (3 GPP) standards characterized by the type of information that they include. From reading SIB13 the multi slot class supported by the base station and highest modulation order may be acquired. The maximum throughput can then be scaled by Signal-to-Noise-and-Interference Ratio (SINR) or Received Signal Strength Indicator (RSSI) to form an estimate of the expected throughput.

Having scanned the spectrum over all frequency bands for which the wireless communication device 140 is designed and for which the scan is to take place, and for each band having identified the operating RAT, e.g. LTE, WCDMA or GSM, for said band, the wireless communication device 140 use the results of the scanning for calculating the expected throughput of the best candidates, and selects the candidate that is most likely to provide the highest throughput.

According to some embodiments herein, CA, Dual Connectivity (DC) or MA capabilities of network nodes serving the cells and/or the wireless communication device 140 are taken into account when estimating throughput. That means when both the network node 111, 121, 131 and the wireless communication device 140 are capable of CA, DC or MC, respectively, the expected throughput may be modified in order to also include any gain coming from CA, DC or MC. Since the information regarding CA, DC or MC is not signaled unless a data channel is actually being set up, this information may normally not be available unless the wireless communication device 140 keeps a record of it itself.

According to some embodiments herein, the network loads of the cells are taken into account when estimating throughput. The wireless communication device 140 may obtain information about the network load and this information may be included when estimating the expected throughput of the network. Since the wireless communication device 140 is less likely to obtain all network resources in a more heavily loaded network, the expected throughput may be compensated by the load, e.g. by scaling,

$$\widehat{E[\psi]} = (1 - \rho)E[\psi]$$

in which $E[\psi]$ is the uncompensated expected throughput, p is the load factor (0<p<1), and $\widehat{E[\psi]}$ is the compensated throughput.

According to the embodiments herein, the determination of the cell and RAT for respective SIMs may also be based on the latency of a number of RATs and cells in the wireless communication system 100.

The latency of a cell and RAT may be obtained from the latency information stored in the wireless communication device 140 measured or estimated earlier in a measurement or application procedure. The wireless communication device 140 may measure the latency of a cell and RAT by measuring a round trip time, i.e. a transmission time between the network node with a particular RAT and the wireless communication device 140, via sending a ping signal to the network node 111, 121, 131. The communication device 140 may compare the round trip time for different RATs and choose the cell and RAT with a shorter round trip time, i.e. lower latency.

The determination of the cell and RAT for respective SIMs may be done in for instance during initial cell search. Hence first, e.g. for SIM1, a best camping cell and RAT is determined. The information on the best camping cell and RAT, and other information including, e.g. timing information for paging, signal strength measurements etc., which are defined according to the standard of the determined RAT may be stored in a memory of the wireless communication device 140. Then the same procedure is performed for SIM2, SIM3 and so on.

For power saving reasons, in idle mode, the RF unit, e.g. the radio receiver within the wireless communication device 140 needs to be shared between the two or more different SIMs. Therefore, after the best cell and RAT is determined for all SIMs, the wireless communication device 140 needs to check if idle mode tasks of the first and second SIMs in the first and second cells have conflict needs in using the radio receiver. Accordingly, the following action will be performed in the wireless communication device 140.

### Action 203

The wireless communication device 140 determines whether idle mode tasks of the first and second SIMs with the determined cells and RATs have conflicting needs.

According to some embodiments herein, the idle mode tasks may comprise at least one of a synchronization procedure, a paging reception, a periodic monitoring of downlink assignments or signal strength measurements.

According to some embodiments, the wireless communication device 140 may determine, based on the paging and/or measurement timing on determined camping cell and RAT for respective SIMs, if the time period for needing the radio receiver, e.g. to receive paging signals, send measurement results etc., is at least partly overlapping, then the idle mode tasks of the first and second SIMs with the determined cells and RATs have conflicting needs. According to some embodiments, the wireless communication device 140 may determine that the idle mode tasks have conflicting needs, if the idle mode tasks require different carrier frequencies.

If the idle mode tasks have conflicting needs, the following actions will be performed in the wireless communication device 140.

### Action 204

The wireless communication device 140 selects a SIM for which to re-determine a cell and/or RAT to camp on.

### Action 205

The wireless communication device 140 determines a third cell and/or a third RAT for the selected SIM.

Therefore, in case of partly overlapping need for the same radio resources or receiver, the wireless communication device 140 determines for which SIM that needs to re-select a camping cell and/or RAT, i.e. select a third cell and/or a third RAT. That means an adaptation of at least one of the determined camping RAT/cells for the SIM may be made so that radio resource management in the wireless communication device 140 can be optimized to save power.

According to some embodiments herein, the wireless communication device 140 may select a SIM for which to re-determine a cell and RAT based on comparing priority of the SIMs. The SIM with lower priority may be selected to re-determine a cell and/or RAT. That means, the adaptation is made based on SIM priority, which may be pre-defined by user or based on which of the SIMs having high QoS. The SIM with lower QoS may have lower priority and may need to reselect a third camping cell and/or RAT.

According to some embodiments herein, the wireless communication device 140 may select a SIM for which to re-determine a cell and RAT based on comparing the throughput or latency of the respective determined cell and RAT for the respective SIMs. The SIM with lower throughput or higher latency of the determined cell and RAT may be selected to re-determine a third cell and/or RAT.

Thus, the wireless communication device 140 may decide the SIM which needs to reselect a camping cell and/or RAT based on the second best expected throughput, i.e. the SIM having the second best throughput will do the cell re-selection.

According to some embodiments herein, the wireless communication device 140 may determine the SIM which needs to reselect a camping cell based on a minimized power consumption or minimized temporal overlap of the idle mode tasks between the different determined cells and RATs. The wireless communication device 140 then orders the affected SIM to do a cell selection, giving information about non-allowed timing periods where the idle mode tasks for the new, i.e. the third cell are forbidden. The information about the second best camping cell and RAT for respective SIMs may have been stored when doing the initial search. Then the determination of a third cell and/or a third RAT for the selected SIM will be this second best cell and RAT. In other embodiments, the search procedure may be started all over again, while setting an indicator of not allowed to be chosen on the current best cell and RAT, as well as on all other possible cells having idle mode tasks at least partly overlapping with the other selected cell and RAT for the other SIM.

According to some embodiments herein, the third RAT may be different from the first or second RATs. However, according to some embodiments herein, the third RAT may be the same as the first or second RATs, but the third cell may be different from the first or second cells.

If the idle mode tasks of respective SIMs with the determined cell and RAT are not overlap, e.g. if the paging on carrier frequencies are non-overlapping for respective SIMs, or if the paging period may overlap but the SIMs have chosen the same carrier frequency, then there is no conflict in the need for the radio resource. Hence the determined cells and RATs for respective SIMs are the best RAT and camping cell for respective SIMs.

Thus, by determining the cells and RATs based on throughput or latency, and by further adapting the determined cells and RATs based on the idle mode tasks, the embodiments herein provide an improved method for optimized selection and combination of RATs and cells for all supported SIMs during idle mode in the wireless communication device.

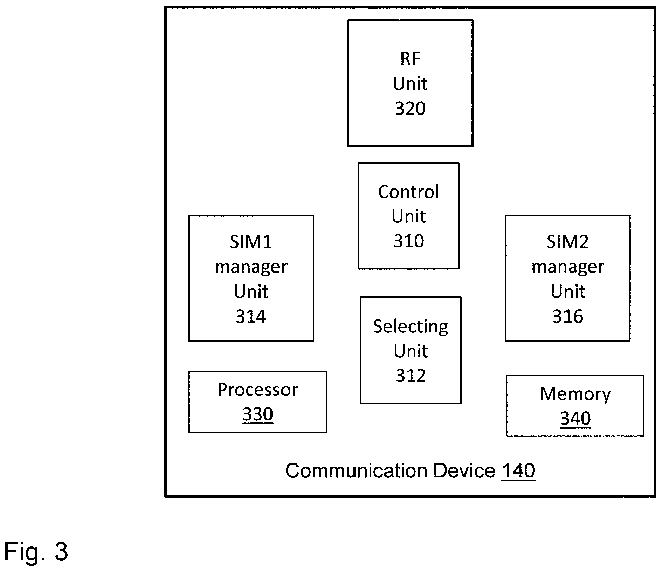

To perform the method actions in the wireless communication device 140 for selecting cell and Radio Access Technology described above in relation to Figure 2, the wireless communication device 140 comprises the following circuits, units or modules depicted in **Figure 3.** As mentioned above, the wireless communication system 100 comprises any one or more 2G, 3G, 4G or LTE networks, Wimax, WLAN or WiFi etc. The wireless communication device 140 may comprise, e.g. **a control unit 310, a selecting unit 312, a RF unit 320, a SIM1 manager unit 314, a SIM2 manager unit 316,** etc. The RF unit may represent any radio resources or radio interfaces, e.g. radio receivers or transmitters etc. for receiving and transmitting radio signals from/to network nodes.

According to the embodiments herein, the communication device 140 is configured to, e.g. by means of the SIM1 manager unit 314 being configured to, determine a first cell and a first RAT to camp on for a first SIM based on estimating throughput or latency of a number of RATs and cells in the wireless communication system 100.

The communication device 140 is further configured to, e.g. by means of the SIM2 manager unit 316 being configured to, determine a second cell and a second RAT to camp on for a second SIM based on estimating throughput or latency of a number of RATs and cells in the wireless communication system 100.

The communication device 140 is further configured to, e.g. by means of the control unit 310 being configured to, determine whether idle mode tasks of the first and second SIMs with the determined first and second cells and RATs have conflicting needs.

When the idle mode tasks of the first and second SIMs with the determined cells and RATs have conflicting needs, e.g. the idle mode tasks overlap at least partly in time or need different carrier frequencies, the communication device 140 is further configured to e.g. by means of a selecting unit 312 being configured to, select a SIM for which to re-determine a cell and/or RAT to camp on, and configured to e.g. by means of the control unit 310, determine a third cell and/or a third RAT for the selected SIM.

According to some embodiments herein, the throughput or latency of at least two different RATs may be estimated for the respective SIMs.

According to some embodiments herein, Multiple Input Multiple Output, MIMO, carrier aggregation, dual connectivity or multi carrier capabilities of network nodes in the cells and/or the wireless communication device 140 may be taken into account when estimating throughput.

According to some embodiments herein, network loads of the cells may be taken into account when estimating throughput.

According to some embodiments herein, the idle mode tasks may comprise at least one of a synchronization procedure, a paging reception, a periodic monitoring of downlink assignments or signal strength measurements.

According to some embodiments herein, the third RAT may be different from the first or second RATs. The third RAT may be the same as the first or second RATs and the third cell is different from the first or second cells.

According to some embodiments herein, the wireless communication device 140 is configured to select a SIM for which to re-determine a cell and RAT based on comparing priority of the SIMs. The SIM with lower priority may be selected to re-determine a cell and/or RAT.

According to some embodiments herein, the wireless communication device 140 is configured to e.g. by means of the selecting unit 312 being configured to, select SIM for which to re-determine a cell and RAT based on comparing the throughput or latency of the respective determined cell and RAT for the respective SIMs. The SIM with lower throughput or higher latency of the determined cell and RAT may be selected to re-determine a cell and/or RAT.

According to some embodiments herein, the wireless communication device 140 is configured to e.g. by means of the selecting unit 312 being configured to, select a SIM for which to re-determine a cell and RAT based on a minimized power consumption or minimized temporal overlap of the idle mode tasks between the different determined cells and RATs.

Those skilled in the art will appreciate that the control unit 310, the selecting unit 312, the SIM1 manager unit 314 and SIM2 manager unit 316 described above may be referred to one unit, a combination of analog and digital circuits, one or more processors, such as **processor 330,** depicted in Figure 3, configured with software and/or firmware and/or any other digital hardware performing the function of each unit. One or more of these processors, the combination of analog and digital circuits as well as the other digital hardware, may be included in a single application-specific integrated circuitry (ASIC), or several processors and various analog/digital hardware may be distributed among several separate components, whether individually packaged or assembled into a system-on-a-chip (SoC).

The wireless communication device 140 may further comprise a **memory 340** comprising one or more memory units. The memory 340 is arranged to be used to store information, e.g. lists of cells, throughput and latency measurements and data, as well as configurations to perform the methods herein when being executed in the communication device 140.

The embodiments herein in the wireless communication device 140 for cell and RAT selection in the wireless communication system 100, may be implemented through one or more processors, such as the processor 330 in the wireless communication device 140 together with computer program code for performing the functions and actions of the embodiments herein. The program code mentioned above may also be provided as a computer program product, for instance in the form of a data carrier carrying computer program code for performing the embodiments herein when being loaded into the wireless communication device 140. One such carrier may be in the form of a CD ROM disc. It is however feasible with other data carriers such as a memory stick. The computer program code may furthermore be provided as pure program code on a server and downloaded to the wireless communication device 140.

When using the word "comprise" or "comprising" it shall be interpreted as nonlimiting, i.e. meaning "consist at least of".

The embodiments herein are not limited to the above described preferred embodiments. Thus, the above embodiments should not be taken as limiting the scope of the invention, which is defined by the appending claims.

**Claims**

1. A method performed in a wireless communication device (140) for selecting cell and Radio Access Technology, RAT, in a wireless communication system (100), wherein the wireless communication device (140) comprises at least two Subscriber Identity Modules, SIMs, and is in an idle operating mode, the method comprising:

   *estimating* throughput or latency of at least two different RATs and cells in the wireless communication system (100) for the respective SIMs;

   *determining* (201) a first cell and a first RAT to camp on for a first SIM based on estimated throughput or latency ;
   *determining* (202) a second cell and a second RAT to camp on for a second SIM based on estimated throughput or latency;
   *determining* (203) whether idle mode tasks of the first and second SIMs with the determined cells and RATs have conflicting needs;
   when the idle mode tasks of the first and second SIMs have conflicting needs,
   *selecting* (204) a SIM for which to re-determine a cell and/or RAT to camp on; and
   *determining* (205) a third cell and/or a third RAT for the selected SIM.

2. The method according to claim 1, wherein Multiple Input Multiple Output, MIMO, carrier aggregation, dual connectivity or multi carrier capabilities of network nodes in the cells and/or the wireless communication device (140) are taken into account when estimating throughput.

3. The method according to any one of claims 1-2, wherein network loads of the cells are taken into account when estimating throughput.

4. The method according to any one of claims 1-3, wherein the idle mode tasks comprises at least one of a synchronization procedure, a paging reception, a periodic monitoring of downlink assignments or signal strength measurements.

5. The method according to any one of claims 1-4, wherein the idle mode tasks of the first and second SIMs have conflicting needs comprises any one of the idle mode tasks overlapping at least partly in time, the idle mode tasks needing different carrier frequencies.

6. The method according to any one of claims 1-5, wherein the third RAT is the same as the first or second RATs and the third cell is different from the first or second cells.

7. The method according to any one of claims 1-6, wherein selecting (204) a SIM for which to re-determine a cell and RAT is based on comparing priority of the SIMs.

8. The method according to any one of claims 1-6, wherein selecting (204) a SIM for which to re-determine a cell and RAT is based on comparing the throughput or latency of the respective determined cell and RAT for the respective SIMs.

9. The method according to any one of claims 1-6, wherein selecting (204) a SIM for which to re-determine a cell and RAT is based on a minimized power consumption or minimized temporal overlap of the idle mode tasks between the different determined cells and RATs.

10. A wireless communication device (140) for selecting cell and Radio Access Technology, RAT, in a wireless communication system (100), wherein the wireless communication device (140) comprises at least two Subscriber Identity Modules, SIMs, and is in an idle operating mode, the wireless communication device (140) is configured to:

estimate throughput or latency of at least two different RATs and cells in the wireless communication system (100) for the respective SIMs;
determine a first cell and a first RAT to camp on for a first SIM based on estimated throughput or latency;
determine a second cell and a second RAT to camp on for a second SIM based on estimated throughput or latency;
determine whether idle mode tasks of the first and second SIMs with the determined cells and RATs have conflicting needs;
when the idle mode tasks of the first and second SIMs have conflicting needs,
select a SIM for which to re-determine a cell and/or RAT to camp on; and
determine a third cell and/or a third RAT for the selected SIM.

11. The wireless communication device (140) according to claim 10, wherein Multiple Input Multiple Output, MIMO, carrier aggregation, dual connectivity or multi carrier capabilities of network nodes in the cells and/or the wireless communication device (140) are taken into account when estimating throughput.

12. The wireless communication device (140) according to any one of claims 10-11, wherein network loads of the cells are taken into account when estimating throughput.

13. The wireless communication device (140) according to any one of claims 10-12, wherein the idle mode tasks comprises at least one of a synchronization procedure, a paging reception, a periodic monitoring of downlink assignments or signal strength measurements.

14. The wireless communication device (140) according to any one of claims 10-13, wherein the idle mode tasks of the first and second SIMs have conflicting needs comprises any one of the idle mode tasks overlapping at least partly in time, the idle mode tasks needing different carrier frequencies.

15. The wireless communication device (140) according to any one of claims 10-14, wherein the third RAT is the same as the first or second RATs and the third cell is different from the first or second cells.

16. The wireless communication device (140) according to any one of claims 10-15, wherein the wireless communication device (140) is configured to select a SIM for which to re-determine a cell and RAT based on comparing priority of the SIMs.

17. The wireless communication device (140) according to any one of claims 10-15, wherein the wireless communication device (140) is configured to select a SIM for which to re-determine a cell and RAT based on comparing the throughput or latency of the respective determined cell and RAT for the respective SIMs.

18. The wireless communication device (140) according to any one of claims 10-15, wherein the wireless communication device (140) is configured to select a SIM for which to re-determine a cell and RAT based on a minimized power consumption or minimized temporal overlap of the idle mode tasks between the different determined cells and RATs.

**Patentansprüche**

1. Ein in einer drahtlosen Kommunikationsvorrichtung (140) ausgeführtes Verfahren zur Auswahl von Zellen und Funkzugangstechnologie, RAT, in einem drahtlosen Kommunikationssystem (100), wobei die drahtlose Kommunikationsvorrichtung (140) mindestens zwei Teilnehmeridentitätsmodule (Subscriber Identity Modules, SIMs) umfasst und sich in einer Ruhezustandsbetriebsart befindet, wobei das Verfahren Folgendes umfasst:

Schätzen des Durchsatzes oder der Latenzzeit von mindestens zwei verschiedenen RATs und Zellen in dem drahtlosen Kommunikationssystem (100) für die jeweiligen SIMs;
Bestimmen (201) einer ersten Zelle und einer ersten RAT zum darauf Lagern für ein erstes SIM, beruhend auf dem geschätzten Durchsatz oder der geschätzten Latenzzeit;
Bestimmen (202) einer zweiten Zelle und einer zweiten RAT zum darauf Lagern für ein zweites SIM beruhend auf einem geschätzten Durchsatz oder einer geschätzten Latenzzeit;
Bestimmen (203), ob Ruhezustandsaufgaben des ersten und zweiten SIM mit den festgelegten Zellen und RATs widersprüchliche Anforderungen haben;
wenn die Ruhezustandsaufgaben des ersten und zweiten SIM widersprüchliche Anforderungen haben,

Auswahl (204) eines SIM, für das eine Zelle und/oder eine RAT zum darauf Lagern neu zu bestimmen ist; und

Bestimmen (205) einer dritten Zelle und/oder einer dritten RAT für das ausgewählte SIM.

2. Verfahren nach Anspruch 1, wobei Mehrfach-Eingangs-Mehrfach-Ausgangs-, MIMO-, Trägeraggregations-, Doppelverbindungs- oder Mehrträgerfähigkeiten von Netzknoten in den Zellen und/oder der drahtlosen Kommunikationsvorrichtung (140) bei der Schätzung des Durchsatzes berücksichtigt werden.

3. Verfahren nach einem der Ansprüche 1-2, wobei Netzwerklasten der Zellen bei der Schätzung des Durchsatzes berücksichtigt werden.

4. Verfahren nach einem der Ansprüche 1 bis 3, wobei die Ruhezustandsaufgaben mindestens ein Synchronisationsverfahren, einen Funkrufempfang, eine periodische Überwachung von Downlink-Zuweisungen oder Signalstärkemessungen umfassen.

5. Verfahren nach einem der Ansprüche 1-4, wobei die Ruhezustandsaufgaben des ersten und zweiten SIM widersprüchliche Anforderungen haben, umfassend eine beliebige der Ruhezustandsaufgaben, die sich zumindest teilweise zeitlich überlappen, wobei die Ruhezustandsaufgaben unterschiedliche Trägerfrequenzen benötigen.

6. Verfahren nach einem der Ansprüche 1-5, wobei die dritte RAT die gleiche ist wie die erste oder zweite RAT und sich die dritte Zelle von der ersten oder zweiten Zelle unterscheidet.

7. Verfahren nach einem der Ansprüche 1-6, wobei die Auswahl (204) eines SIM, für das eine Zelle und RAT neu zu bestimmen sind, auf dem Vergleich der Priorität der SIMs beruht.

8. Verfahren nach einem der Ansprüche 1-6, wobei die Auswahl (204) eines SIM, für das eine Zelle und RAT neu zu bestimmen sind, auf dem Vergleich des Durchsatzes oder der Latenzzeit der jeweils bestimmten Zelle und RAT für die jeweiligen SIMs beruht.

9. Verfahren nach einem der Ansprüche 1 bis 6, wobei die Auswahl (204) eines SIM, für das eine Zelle und RAT neu zu bestimmen sind, auf einem minimierten Energieverbrauch oder einer minimierten zeitlichen Überlappung der Ruhezustandsaufgaben zwischen den unterschiedlichen bestimmten Zellen und RATs beruht.

10. Drahtlose Kommunikationsvorrichtung (140) zur Auswahl von Zellen und Funkzugangstechnologie, RAT, in einem drahtlosen Kommunikationssystem (100), wobei die drahtlose Kommunikationsvorrichtung (140) mindestens zwei Teilnehmeridentitätsmodule (Subscriber Identity Modules, SIMs) umfasst und sich in einer Ruhezustandsbetriebsart befindet, in der die drahtlose Kommunikationsvorrichtung (140) konfiguriert ist, um:

den Durchsatz oder die Latenzzeit von mindestens zwei verschiedenen RATs und Zellen in dem drahtlosen Kommunikationssystem (100) für die jeweiligen SIMs zu schätzen;

eine erste Zelle und eine erste RAT zu bestimmen, zum darauf Lagern, für ein erstes SIM beruhend auf dem geschätzten Durchsatz oder der geschätzten Latenzzeit;

eine zweite Zelle und eine zweite RAT zu bestimmen, zum darauf Lagern, für ein zweites SIM beruhend auf dem geschätzten Durchsatz oder der geschätzten Latenzzeit;

zu bestimmen, ob Ruhezustandsaufgaben des ersten und zweiten SIM mit den bestimmten Zellen und RATs widersprüchliche Anforderungen haben;

wenn die Ruhezustandsaufgaben des ersten und zweiten SIM widersprüchliche Anforderungen haben,

ein SIM auszuwählen, für das eine Zelle und/oder eine RAT neu bestimmt werden soll; und

eine dritte Zelle und/oder eine dritte RAT für das ausgewählte SIM zu bestimmen.

11. Drahtlose Kommunikationsvorrichtung (140) nach Anspruch 10, wobei Mehrfach-Ausgangs-, MIMO-, Trägeraggregations-, Doppelverbindungs- oder Mehrträgerfähigkeiten von Netzwerkknoten in den Zellen und/oder der drahtlosen Kommunikationsvorrichtung (140) bei der Schätzung des Durchsatzes berücksichtigt werden.

12. Drahtlose Kommunikationsvorrichtung (140) nach einem der Ansprüche 10-11, wobei die Netzwerklasten der Zellen bei der Schätzung des Durchsatzes berücksichtigt werden.

13. Drahtlose Kommunikationsvorrichtung (140) nach einem der Ansprüche 10-12, wobei die Ruhezustandsaufgaben mindestens ein Synchronisationsverfahren, einen Funkrufempfang, eine periodische Überwachung von Downlink-Zuweisungen oder Signalstärkemessungen umfassen.

14. Drahtlose Kommunikationsvorrichtung (140) nach einem der Ansprüche 10-13, wobei die Ruhezustandsaufgaben des ersten und zweiten SIM widersprüchliche Anforderungen haben, umfassend eine beliebige der Ruhezustandsaufgaben, die sich zumindest teilweise zeitlich überlappen, wobei die Ruhezustandsaufgaben unterschiedliche Trägerfrequenzen benötigen.

15. Drahtlose Kommunikationsvorrichtung (140) nach einem der Ansprüche 10-14, wobei die dritte RAT die gleiche wie die erste oder zweite RAT ist und die dritte Zelle sich von der ersten oder zweiten Zelle unterscheidet.

16. Drahtlose Kommunikationsvorrichtung (140) nach einem der Ansprüche 10-15, wobei die drahtlose Kommunikationsvorrichtung (140) konfiguriert ist, um ein SIM auszuwählen, für das eine Zelle und eine RAT beruhend auf dem Vergleich der Priorität der SIMs neu bestimmt werden sollen.

17. Drahtlose Kommunikationsvorrichtung (140) nach einem der Ansprüche 10-15, wobei die drahtlose Kommunikationsvorrichtung (140) konfiguriert ist, um ein SIM auszuwählen, für das eine Zelle und eine RAT beruhend auf dem Vergleich des Durchsatzes oder der Latenzzeit der jeweils bestimmten Zelle und RAT für die jeweiligen SIMs neu zu bestimmen sind.

18. Drahtlose Kommunikationsvorrichtung (140) nach einem der Ansprüche 10-15, wobei die drahtlose Kommunikationsvorrichtung (140) konfiguriert ist, um ein SIM auszuwählen, für das eine Zelle und eine RAT beruhend auf einem minimierten Energieverbrauch oder einer minimierten zeitlichen Überlappung der Ruhezustandsaufgaben zwischen den unterschiedlichen bestimmten Zellen und RATs neu zu bestimmen sind.

**Revendications**

1. Procédé réalisé dans un dispositif de communication sans fil (140) pour sélectionner une cellule et une technologie d'accès radio, RAT, dans un système de communication sans fil (100), le dispositif de communication sans fil (140) comprenant au moins deux modules d'identité d'abonné, SIMs, et étant dans un mode de fonctionnement inactif, le procédé comprenant :

l'estimation d'un débit de transfert ou d'un délai de transit d'au moins deux différentes RATs et cellules dans le système de communication sans fil (100) pour les SIMs respectifs ; la détermination (201) d'une première cellule et d'une première RAT sur lesquelles il faut résider, pour un premier SIM, sur la base du débit de transfert ou du délai de transit estimé ; la détermination (202) d'une deuxième cellule et d'une deuxième RAT sur lesquelles il faut résider, pour un second SIM, sur la base du débit de transfert ou du délai de transit estimé ; la détermination (203) du fait que des tâches de mode inactif des premier et second SIMs avec les cellules et RATs déterminés ont, ou n'ont pas, des nécessités en conflit ; lorsque les tâches de mode inactif des premier et second SIMs ont des nécessités en conflit, la sélection (204) d'un SIM pour lequel il faut redéterminer une cellule et/ou RAT sur laquelle il faut résider ; et la détermination (205) une troisième cellule et/ou une troisième RAT pour le SIM sélectionné.

2. Procédé selon la revendication 1, dans lequel des capacités d'entrées multiples-sorties multiples, MIMO, d'agrégation de porteuses, de double connectivité ou de multiporteuse de nœuds de réseau dans les cellules et/ou le dispositif de communication sans fil (140) sont prises en compte lors de l'estimation de débit de transfert.

3. Procédé selon l'une quelconque des revendications 1 à 2, dans lequel des charges de réseau des cellules sont prises en compte lors de l'estimation du débit de transfert.

4. Procédé selon l'une quelconque des revendications 1 à 3, dans lequel les tâches de mode inactif comprennent au moins une d'une procédure de synchronisation, d'une réception de radiomessagerie, d'une surveillance périodique d'attributions ou de mesures d'intensité de signal de liaison descendante.

5. Procédé selon l'une quelconque des revendications 1 à 4, dans lequel le cas où les tâches de mode inactif des premier et second SIMs ont des nécessités en conflit comprend l'un quelconque des cas où les tâches de mode inactif se chevauchent au moins partiellement en temps, ou les tâches de mode inactif nécessitent différentes fréquences porteuses.

6. Procédé selon l'une quelconque des revendications 1 à 5, dans lequel la troisième RAT est la même que la première ou la deuxième RAT et la troisième cellule est différente de la première ou de la deuxième cellule.

7. Procédé selon l'une quelconque des revendications 1 à 6, dans lequel la sélection (204) d'un SIM pour lequel il faut redéterminer une cellule et une RAT est sur la base de la comparaison de la priorité des SIMs.

8. Procédé selon l'une quelconque des revendications 1 à 6, dans lequel la sélection (204) d'un SIM pour lequel il faut redéterminer une cellule et une RAT est sur la base de la comparaison du débit de transfert ou du délai de transit des cellule et RAT déterminées respectives pour les SIMs respectifs.

9. Procédé selon l'une quelconque des revendications 1 à 6, dans lequel la sélection (204) d'un SIM pour lequel il faut redéterminer une cellule et une RAT est sur la base d'une consommation énergétique minimisée ou un chevauchement temporel minimisé des tâches de mode inactif entre les différentes cellule et RAT déterminées.

10. Dispositif de communication sans fil (140) pour sélectionner une cellule et une technologie d'accès radio, RAT, dans un système de communication sans fil (100), dans lequel le dispositif de communication sans fil (140) comprend au moins deux modules d'identité d'abonné, SIMs, et est dans un mode de fonctionnement inactif, le dispositif de communication sans fil (140) est configuré pour :

estimer un débit de transfert ou un délai de transit d'au moins deux différentes RATs et cellules dans le système de communication sans fil (100) pour les SIMs respectifs ;

déterminer une première cellule et une première RAT sur lesquelles il faut résider, pour un premier SIM, sur la base du débit de transfert ou du délai de transit estimé ;

déterminer une deuxième cellule et une deuxième RAT sur lesquelles il faut résider, pour un second SIM, sur la base du débit de transfert ou du délai de transit estimé ;

déterminer le fait que des tâches de mode inactif des premier et second SIMs avec les cellules et RATs déterminées ont, ou n'ont pas, des nécessités en conflit ;

lorsque les tâches de mode inactif des premier et second SIMs ont des nécessités en conflit, sélectionner un SIM pour lequel il faut redéterminer une cellule et/ou une RAT sur lesquelles il faut résider ; et

déterminer une troisième cellule et/ou une troisième RAT pour le SIM sélectionné.

11. Dispositif de communication sans fil (140) selon la revendication 10, dans lequel des capacités d'entrées multiples-sorties multiples, MIMO, d'agrégation de porteuses, de double connectivité ou de multiporteuse de nœuds de réseau dans les cellules et/ou le dispositif de communication sans fil (140) sont prises en compte lors de l'estimation de débit de transfert.

12. Dispositif de communication sans fil (140) selon l'une quelconque des revendications 10 à 11, dans lequel des charges de réseau des cellules sont prises en compte lors de l'estimation du débit de transfert.

13. Dispositif de communication sans fil (140) selon l'une quelconque des revendications 10 à 12, dans lequel les tâches de mode inactif comprennent au moins une d'une procédure de synchronisation, d'une réception de radiomessagerie, d'une surveillance périodique d'attributions ou de mesures d'intensité de signal de liaison descendante.

14. Dispositif de communication sans fil (140) selon l'une quelconque des revendications 10 à 13, dans lequel le cas où les tâches de mode inactif des premier et second SIMs ont des nécessités en conflit comprend l'un quelconque des cas où les tâches de mode inactif se chevauchant au moins partiellement en temps, ou les tâches de mode inactif nécessitent différentes fréquences porteuses.

15. Dispositif de communication sans fil (140) selon l'une quelconque des revendications 10 à 14, dans lequel la troisième RAT est la même que la première ou la deuxième RAT et la troisième cellule est différente de la première ou de la deuxième cellule.

16. Dispositif de communication sans fil (140) selon l'une quelconque des revendications 10 à 15, dans lequel le dispositif de communication sans fil (140) est configuré pour sélectionner un SIM pour lequel il faut redéterminer une cellule et une RAT sur la base de la comparaison de la priorité des SIMs.

17. Dispositif de communication sans fil (140) selon l'une quelconque des revendications 10 à 15, dans lequel le dispositif de communication sans fil (140) est configuré pour sélectionner un SIM pour lequel il faut redéterminer une cellule et une RAT sur la base de la comparaison du débit de transfert ou du délai de transit des cellule et RAT déterminées respectives pour les SIMs respectifs.

18. Dispositif de communication sans fil (140) selon l'une quelconque des revendications 10 à 15, dans lequel le dispositif de communication sans fil (140) est configuré pour sélectionner un SIM pour lequel il faut redéterminer une cellule et une RAT sur la base d'une consommation énergétique minimisée ou d'un chevauchement temporel minimisé des tâches de mode inactif entre les différentes cellule et RAT déterminées.

Fig. 1

EP 3 391 691 B1

```
┌─────────────────────────────────────────────────────┐
│      201. Determine first cell/RAT for first SIM      │
└─────────────────────────────────────────────────────┘
                          │
                          ▼
┌─────────────────────────────────────────────────────┐
│    202. Determine second cell/RAT for second SIM      │
└─────────────────────────────────────────────────────┘
                          │
                          ▼
┌─────────────────────────────────────────────────────┐
│    203. Determine whether idle mode tasks overlaps    │
└─────────────────────────────────────────────────────┘
                          │
                          ▼
┌─────────────────────────────────────────────────────┐
│      204. Select SIM to re-determine cell/RAT         │
└─────────────────────────────────────────────────────┘
                          │
                          ▼
┌─────────────────────────────────────────────────────┐
│   205. Determine third cell/RAT for the selected SIM  │
└─────────────────────────────────────────────────────┘
```

Fig. 2

Fig. 3

Communication Device 140

RF Unit 320

Control Unit 310

SIM1 manager Unit 314

SIM2 manager Unit 316

Selecting Unit 312

Processor 330

Memory 340

EP 3 391 691 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2613592 A
- EP 2605558 A
- EP 2466970 A
- WO 2015073448 A